# EUROPEAN PATENT SPECIFICATION

(11) **EP 1 435 280 B1**
(45) Date of publication and mention of the grant of the patent: **20.08.2008**
(21) Application number: 03079134.7
(22) Date of filing: 19.12.2003
(51) Int. Cl.: B25J 9/16

(54) **A method and a system for programming an industrial robot**
Verfahren und Vorrichtung zum Programmieren eines Industrieroboters
Procédé et système de programmation d'un robot industriel

(30) Priority: 30.12.2002 SE 0203909
(43) Date of publication of application: 07.07.2004
(73) Proprietor: ABB Research Ltd., 8050 Zürich (CH)
(72) Inventor: Pretlove, John, 1378 Sandvika (NO); Pettersen, Thomas, 1157 Oslo (NO); Skourup, Charlotte, 3040 Drammen (NO)
(74) Representative: Dahlstrand, Björn

(56) References cited:
- DE-A1- 19 626 459
- JP-A- 53 136 263
- US-A1- 5 521 477
- US-B1- 6 256 597
- SUH S-H ET AL: "PROTOTYPE INTEGRATED ROBOTIC PAINTING SYSTEM: SOFTWARE AND HARDWARE DEVELOPMENT" JOURNAL OF MANUFACTURING SYSTEMS, SOCIETY OF MANUFACTURING ENGINEERS, DEARBORN, MI, US, vol. 12, no. 6, January 1993 (1993-01), pages 463-473, XP000448773 ISSN: 0278-6125

## Description

The present invention relates to a method in connection with programming of an industrial robot, comprising teaching the robot a path which has a number of waypoints located on or in the vicinity of an object to be processed by the robot. The processing of the object could be any type of surface processing application carried out by an industrial robot, such as painting, glazing, sanding, polishing, grinding, welding, picking and placing, and assembling.

The present invention also relates to a computer program product directly loadable into the internal memory of a computer, comprising software code portions for performing the steps of the method according to the invention, when said product is run on a computer.

The present invention also relates to a computer readable medium having a program recorded thereon, where the program is to make a computer perform the steps of the method according to the invention when said program is run on the computer.

The present invention also relates to the use of a method according to the invention for a paint application.

The present invention further relates to a system for use in connection with programming of an industrial robot, the system comprising information obtaining means, obtaining information about the waypoints of the path in relation to the object, a storage unit, for storing the obtained information, a graphics generator, generating a graphical representation, and a display member displaying a view comprising the object and the graphical representation generated by the graphics generator.

### PRIOR ART

Robots are often used for processing the surface of an object. Existing practice for programming a robot involves teaching the robot a sequence of waypoints. The waypoints define the path, which the robot shall follow during the processing of the object. A waypoint comprises three-dimensional position and three-dimensional orientation information. The robot is taught how to perform the task by being guided through the various waypoints along the desired operating path during the programming. These waypoints are stored as instructions into a memory in the robot control unit. During operation of the robot, the program instructions are executed, thereby making the robot operate as desired.

Generally, the robot is programmed to perform a task by an human operator who manually jogs the robot, to the desired positions along the path using a movable programming unit, a so-called teach pendant. An industrial robot usually carries an end-effector comprising a tool for performing the processing, for instance a welding tool or a painting tool. During programming of the path, the operator has to position and orient the end-effector in each waypoint along the path. Alternatively, if a 3D CAD model of the object exists, a person with a computer scientist background teaches the waypoints in a robot simulation system, so called off-line programming. Existing methods based on the CAD approach include visual feedback in an entirely virtual world, i.e. a virtual representation of both the real world and the object.

US5521477 describes a method for offline CAD simulation and teaching of waypoints of a robot in a CAD system and the result is displayed on a screen of the CAD system. In addition to simulating robot movement the system tries to determine the coating conditions.

Either way, the teaching process is time consuming, troublesome, error prone, and in almost all cases requires several iterations before the program is acceptable. The CAD approach is costly, it requires a 3D CAD model of the object and it is not always intuitive to use. The complexity of the CAD-system requires the operator who is programming the robot to have knowledge about computer science. Such a person usually has little or no knowledge about the process. In the case of manual teaching, the control of the process is often difficult to optimize, but it has the advantage of indirectly utilizing implicit process knowledge of the operator. Another disadvantage with the manual teaching method is that it does not include any visual feedback to the operator, visualizing what has been programmed. The operator must use the trial and error method until the program is acceptable. For example, when the robot is to be taught how to paint an object and the entire surface of the object must be covered with color, it is impossible for the operator, without running the program afterwards, to see if he has missed some part of the surface. Thus, a number of iterations are required before the quality of the processing, in this example the painting, is satisfactory.

From the Japanese patent JP10011122 an improved method for teaching an industrial robot is known. The method includes presenting a visual feedback to the operator of the response resulting from an operation before the robot is operated. The visual feedback is represented together with the real object. The method comprises: measuring the current state of the robot and its environment by a CCD camera, the operator inputs robot operation information by the teaching pendant, estimating a response after the operation of the robot based on the inputted information, converting the estimated operation into information to be displayed as a picture, preparing picture information related to the response of the robot based on the information related to the camera and the estimated information, synthesizing the estimated response based on the picture information measured by the CCD camera and the picture information related to the response of the robot, and displaying a view comprising the robot, its environment and the estimated response of the robot. Thus, this method shows the next operation to be performed by the robot, but it does not provide any visual feedback to the operator regarding what he has been programmed.

### SUMMARY OF THE INVENTION

The object of the present invention is to provide an improved industrial robot programming solution, which reduces the teaching time for the teaching process and increases the quality of the processing result.

According to one aspect of the invention, the object is achieved by means of the initially defined method, comprising: obtaining information about the position of the waypoints in relation to the object, storing the information about the position of the waypoints, simulating the robot path based on the received information about the waypoints and a model of the robot, generating a graphical representation of the robot path based on the simulated robot path, and displaying a view comprising the object and said graphical representation of the robot path projected on the object. This method improves the teaching process by visualizing the robot path in relation to the real object to be processed.

Obviously, it is not efficient if the robot moves the tool in straight lines between the waypoints specified by the operator. In order to achieve an efficient robot program, effecting the tool to pass through the specified waypoint at required speed and direction, a robot path has to be generated. The robot path is generated from a path simulator, simulating the robot path based on specified waypoints and a model of the robot. Computer generated information, representing the generated robot path, is displayed projected on the real object or on an image of the real object. Thus, it is possible for the operator to get extended visual feedback while making a new robot program related to a specific object. It is no longer necessary to run the robot program to view the result of the programming. Thereby, the number of iterations needed and thus the teaching time is reduced. The method is particularly advantageously during off-line programming. Another advantage of the method is that no 3D CAD model of the object is needed, since the generated graphic is projected on the real object or on an image of the real object. The programming time will be significantly reduced since the operator will be able to make a robot program at a higher quality level during the first iteration compared to today's methods.

According to a further embodiment of the invention, the method comprises obtaining information about the position of a display member in relation to the object and displaying said view in dependence of the position of the display member in relation to the object. Preferably, the orientation of the display member is also obtained and said view is displayed in dependence of the position and orientation of the display member. Thus the view displayed on the display member depends on its position and orientation in relation to the object. Thus, the operator can walk around the real object and se the result of what he has been teaching on the real object from different viewpoints.

According to a further embodiment of the invention, the method comprises: obtaining information about tool orientations in the waypoints, and generating a graphical representation of the tool orientations in the waypoints. During programming of the robot, the operator also needs to teach the robot how to orientate the tool. The programming is further simplified if the orientations of the tool in the waypoints are visualized to the operator.

According to a further embodiment of the invention, the method comprises: obtaining information about the process to be performed by the robot in connection with the robot path, simulating the result of the process based upon the obtained information about the waypoints, the obtained information about the process and a model of the process, generating a graphical representation of the simulated result of the process, and displaying a view showing the graphical representation of the simulated result of the process projected on the object. The information received is for example information about the tool configuration, such as the brush to be used in a painting process. Thereby, it is possible for the operator to estimate if the tool configuration chosen achieves the desired result. The final result of the process performed by the robot is presented to the operator in the real work environment. In the painting example, the result of the painting on the surface of the object is displayed. The method visualizes the outcome of the programming process to the operator, without the need of running the robot program or start the process. Preferably, it is possible for the operator to choose between visualizing the robot path, the result of the process, or both the robot path and the result of the process at the same time.

The visualization of the robot path and/or the outcome from the process may either be visualized, while the operator teaches a new robot program, or the robot path and/or the outcome from the process may be visualized as a function of time after the operator has completed the teaching, but before the robot program code is generated and downloaded to the robot controller. In both cases the operator is able to investigate the simulated result of the robot program without having to execute the new robot program in reality.

During the visualization of the robot processing as a function of time, the method supports stopping, pausing, restarting, and play backwards the simulation.

According to a further embodiment of the invention, the method comprises: obtaining information about which tool to be used to perform the process and about the orientation of the tool in the waypoints, simulating the tool performing the process, generating a graphical representation of the tool performing the process along the robot path based upon the obtained information about the position of the waypoints and the orientation of the tool, and displaying a view showing the tool moving along the robot path performing the process, based on the generated graphical representation of the simulation of the tool performing the process. For example, if the process is painting, a virtual paint-gun is displayed moving along the robot path performing the paint procedure and the paint being applied onto the object is shown. This visualization of the tool performing the process helps the operator to evaluate the taught robot program.

According to a further embodiment of the invention the view of the robot path and/or the result of the process is displayed as a function of time and the view is displayed proportional to the real-time. Real-time is the actual time it takes for the robot to move through the path performing the process. In a preferred embodiment the method further comprises: receiving information about a desired speed of the displaying of the view, and displaying the view in accordance with the desired speed. Preferably, the speed is altered in relation to the real-time. Sometimes the operator finds the real-time speed to be too fast, and thus wishes to slow down the speed. This embodiment of the invention makes it possible for the operator to alter the speed of the display.

According to a further embodiment of the invention the method comprises generating different graphical representations depending on whether the result of the process is displayed from a front side or a backside in relation to the object. Thus it is easy for the operator to distinguish between back and front. For example, a rendered paint stroke is shown with a front side and a backside with the backside rendered with transparent graphics. That makes it possible to turn off the graphical process information, for example the generation of paint stroke, when the backside of the paint stroke in shown.

According to a further embodiment of the invention the method comprises simulating the quality of the result of the process based on one or a plurality of predefined quality parameters and the model of the process, generating a graphical representation of the quality of the result of the process, and displaying the view based on the generated graphical representation of the simulation of the quality of the result of the process. Preferably, the method further comprises estimating whether the quality of the result does not meet one or several quality requirements, based on said simulation of the quality of the result of the process, and generating said graphical representation with a visual feedback to the operator where the process quality is estimated not to meet the quality requirements. In the paint process, the quality parameters for instance are overlap between paint strokes, parts of the object not covered by the paint, the paint thickness, the paint width, and sag of the paint. Thus, if the paint is estimated to be sagging or not covering the object, this will be shown by the generated graphics. This embodiment makes it possible for the operator to generate robot programs with high quality, without the need of executing the actual process.

According to a further embodiment of the invention the method comprises determining whether a point on the robot path is within the working range of the robot and notifying the operator if the point is outside the working range. Whether a point is within or outside the working range of the robot is determined based on a model of the robot. When the operator is specifying new waypoints or editing stored waypoints it is essential that the waypoints are within the working range of the robot. If a specified waypoint is outside the working range the operator is notified. It is also possible to check if any of the points on the robot path generated by the simulator is outside the working range.

When a point cases a singularity of the robot the point is outside the working rage.

According to a further embodiment of the invention the method comprises obtaining an image of the object, registering the generated graphical representation to the image of the object to provide a composite augmented reality image and displaying said view based on the composite augmented reality image. Preferably the image of the object is obtained by means of a camera. An augmented reality system merges computer-generated graphics of objects with the user's space in the real world. In this embodiment, the computer generated graphics of the waypoints and paths are merged with the image of the real object. Alternatively, the computer-generated graphics of waypoints and paths is displayed on see-through glasses worn by the operator. The generated graphics are projected on the glasses so that the operator can see the waypoints and paths projected in relation to the real world and the object. In order to perform a correct graphics registration, a tracking system is used to obtain the pose of the projection surface of the display device in relation to the object coordinate frame.

According to a further embodiment of the invention the method comprises obtaining information about the position of a pointing member pointing at points on or in the vicinity of the object, determining the position of the points in relation to the object coordinate frame based upon said obtained information, and storing the point being presently pointed out by the pointing member as a waypoint upon receiving a recording signal. Thus, the operator can specify the waypoints by walking around the object and pointing out the waypoints using the pointing member. The operator does not need any particular computer knowledge and he uses his knowledge and experience about the process during teaching of the robot.

According to a further aspect of the invention, the object is achieved by a computer program product directly loadable into the internal memory of a computer, comprising software code portions for performing the steps of the method according to the invention, when said product is run on a computer. The computer program product is provided either on a computer readable medium or through a network such as the Internet.

According to another aspect of the invention, the object is achieved by a computer readable medium having a program recorded thereon, where the program is to make a computer perform the steps of the method according to the invention, when said program is run on the computer.

According to still another aspect of the invention, the object is achieved by the initially defined system characterized in that it comprises a simulation unit, simulating the robot path based on the obtained information about the waypoints and a model of the robot, that the graphics generator, is adapted for generating a graphical representation of the simulated robot path, preferably along with process related information, and that the display member, is adapted for displaying a view showing said graphical representation of the simulated robot path projected on the object.

According to an embodiment of the invention the system comprises a handheld display device comprising the display member and a camera. Preferably the handheld display device is arranged so that the user seems to look directly through the display. A handheld display device is useful when a user needs to see the computer-generated information from time to time.

### BRIEF DESCRIPTION OF THE DRAWINGS

The invention will now be explained more closely by the description of different embodiments thereof and with reference to the appended figures.
- Fig. 1: shows a system for use in connection with programming of an industrial robot, according to an embodiment of the invention.
- Fig. 2: shows a block diagram of the system according to an embodiment of the invention.
- Fig. 3: shows examples of an augmented reality view showing a graphical representation of the robot path projected on a real object and path information.
- Figs.: 4a and 4b show flow charts of a method according to the invention for teaching an industrial robot a path according to an embodiment of the invention.
- Fig. 5: shows an embodiment of the invention comprising a handheld display device.

### DETAILED DESCRIPTION OF PREFERRED EMBODIMENTS OF THE INVENTION

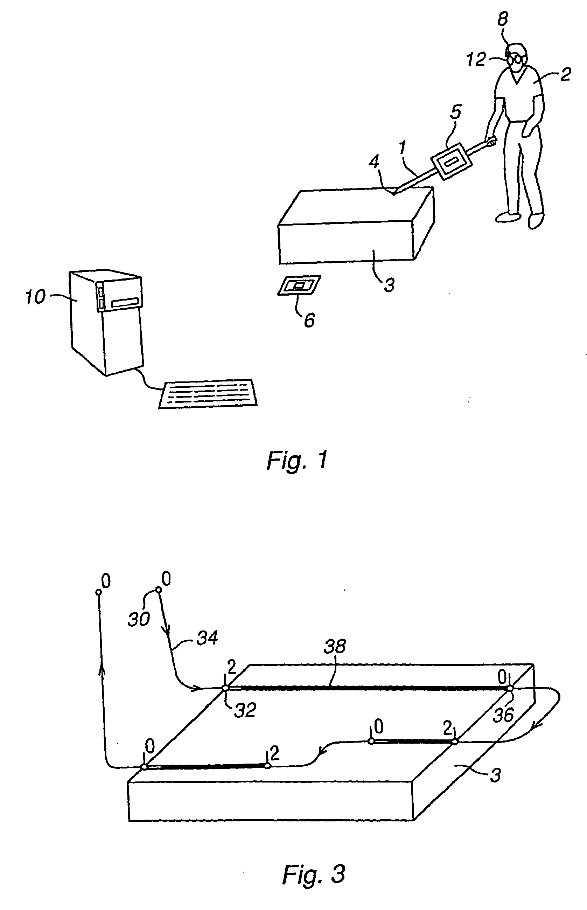

Fig. 1 illustrates a system for use in connection with programming of an industrial robot according to the present invention. The system comprises a pointing member 1 utilized by a human operator 2 for teaching the robot how to process an object 3. The pointing member can either be the processing tool itself, or a device particularly adapted for the purpose of teaching the processing of the object. The teaching comprises teaching a number of waypoints given in a specific sequence and located on or in the close vicinity of the object 3. Each waypoint comprises the position of a point on or in a close vicinity of the object, the orientation of a processing tool, such as a paintbrush, in the point, and data related to the process.

The operator holds the pointing member 1 in his hand and points at the point he wants to include in the path and orientates the pointing member as he wishes the processing tool to be oriented in the point. The operator records a point by activation of an activation member, which generates a recording signal. Upon receiving the recording signal the system stores the point as a waypoint. The pointing member 1 is provided with at least one marker 5, called a pointing marker, attached thereto. The pointing marker 5 is used for determining the position and orientation of the pointing member 1 in relation to the object. Alternatively, the pointing device may generate positions and orientations in a number of different ways, e.g. with inertial sensors, gyros, magnetic trackers, laser-based tracking systems, and ultrasonic trackers producing positions and orientations of the pointing device in relation to a fixed coordinate system.

The system is based on image recognition and requires at least one reference marker 6, which is fixed in relation to the object. The function of the reference marker 6 is to make up a reference point for image recognition algorithms, and a reference point to which computer generated graphics should be related. The system further comprises a camera unit 8. The camera unit 8 comprises an optical camera and an image grabber feeding the system with real-time image data. The camera can either be fixed in the space or moved around. For instance the camera can be attached to the operator's head or elsewhere on his body. In this embodiment the camera is attached to a par of glasses worn by the operator. All types of cameras can be used, but the demand for accuracy of position and orientation determines the type of camera. For example, a web camera, a video camera, or a CCD camera could be used. In another embodiment, more than one camera can be used, for example two cameras could be used arranged so as to provide stereoscopic images.

The camera provides either an analogue or a digital video signal, which is transferred to a computer 10 including a processor. The processor of the computer 10 is utilized for running the image recognition algorithms for determining the position and orientation of the pointing member 1 in relation to the object, for running algorithms generating a graphical representation of waypoints pointed out by the operator, for combining the generated graphics of the waypoints with the image provided by the camera to provide a composite augmented reality image and for running the simulation of the robot path and the result of the process.

The system further comprises a graphical display member 12 on which computer generated graphics is displayed to the operator. The graphical display member 12 visualizes the view of the camera combined with the computer-generated graphics. In this embodiment, the operator wears a head-mounted unit including a head-mounted graphical display 12 with the camera attached to the display. The head-mounted unit is a pair of wearable glasses on which the computer-generated information is projected in relation to the operator's position in the room. The view displayed depends on the position of the display member in relation to the object. The position of the display in relation to the object is determined by image recognition based on the image from the camera mounted on the display and markers (not shown) provided on the object, or some other tracking system, e.g. with inertial sensors, gyros, magnetic trackers, laser-based tracking systems, ultrasonic trackers, or vision-based feature tracking. Alternatively, a head-mounted display is used. In this embodiment, the camera is mounted to the display device, producing the same view as the operator would see. The computer-generated information is then registered with the camera image before displayed to the operator. In another embodiment, the display member is for example a handheld screen, such as a Personal Digital Assistant (PDA) screen, or a laptop screen. In the case of a PDA, the operator will hold the PDA in his hand while programming and the outcome of the programming will be visualized on the PDA screen. The display member could either give a single view or a stereoscopic representation of the graphics.

The pointing member 1 comprises a number of interaction means, such as push-buttons, which are adapted for interaction between the operator and the system. One of the interaction means comprises an activating member, which upon activation generates a recording signal for recording the point as a waypoint. A second interaction means is used for indicating whether the processing should be on or off between the waypoints. For example, if the process is painting, the interaction means indicates whether the paint is on or off. The system is provided with a third interaction means for input of information related to the process to the system. For example, in a paint application, it is possible to select one or several options for the paintbrush stored in the robot controller. For other applications, for example polishing, the options relates to the configuration of the polishing brush.

The relationship between the marker 5 and the tip 4 of the pointing member 1 must be known, so that the position and orientation of the tip can be determined. The image recognition algorithms recognize the pointing marker 5. The position of the tip of the pointing member and the orientation of the body of the pointing member in the reference marker coordinate system is determined by the recognition of the markers 5, 6. The recognition is based on the size and angle of the pattern on the marker in relation to the known pattern learned by the image recognition algorithms. The position is given in 3D as [x, y, z]. The orientation is given in 3D, for example as a rotation matrix [a 3x3 matrix].

While teaching the robot, the operator records waypoints to be passed through during the processing of the object and he also records process related information in connection with the waypoints by using the interaction means. In addition to the position, the orientation of the pointing member is recorded and the recorded orientation represents the orientation of the robot tool. Hence, the recorded sequence of waypoints creates the basis for the robot path in the robot program.

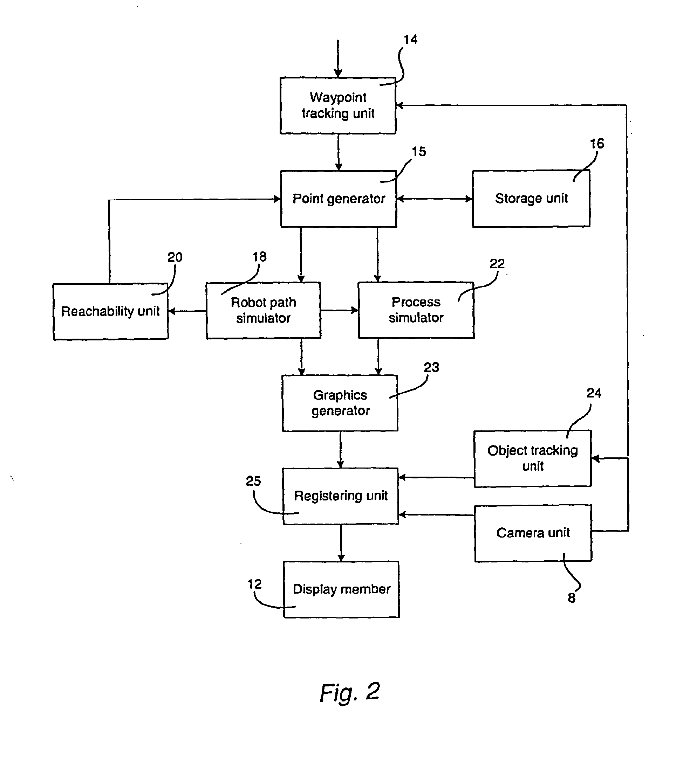

Fig. 2 shows a block diagram of a system according to an embodiment of the invention. The system comprises a tracking unit 14, which determines the positions and orientations of the way points taught by the operator. The tracking unit allows pose information (3DOF position and 3DOF orientation) to be specified in relation to a fixed object coordinate system. In this embodiment the position and orientation is determined by means of image recognition. Examples of other tracking units are ultrasonic tracking systems, magnetic tracking systems, tracking systems based upon inertial navigation, which uses accelerometers and gyros, mechanical arms, vision-based and optical systems, and hybrid systems combining the previously mentioned technologies. In this embodiment, input data to the tracking unit 14 is video signals from the camera unit 8 and information from the activating members of the pointing member 1, such as a record signal and process related information. Alternatively, the waypoints are loaded into the system from an external system, e.g. a CAD application, or from a database of stored waypoints and process information.

The system further comprises a point generator 15, which generates a sequence of points on the robot path with associated process related information based upon the waypoints specified from the tracking system. For a paint application, point data will typically be position and orientation of the brush, fan description, paint color, paint on/off, etc. The point generator will modify the waypoints specified by the operator depending on the process related information, such as brush number, and configuration parameters. Input to the point generator is waypoints with associated process information provided by the tracking unit 14. Output from the point generator 15 is a sequence of modified waypoints with process specific information. The point generator also adds new waypoints to the sequence of waypoints already specified by the operator. The sequence of waypoints generated by the point generator is stored in a storage unit 16, which also is used for storing system information.

A robot path simulator 18 simulates the actual robot path based on the list of waypoints and process information generated by the point generator 15. The robot path simulator comprises a model of the robot and the control system of the robot. The robot path simulator generates the actual robot path based on the waypoints, the process information, and the model of the robot and the robot control system. The generated robot path is used both for visualizing the robot movements in real time, i.e. as a function of time, and for visualizing a trace of the actual robot path. Input to the robot path simulator is the sequence of waypoints from the point generator and robot configuration data. The output from the robot path simulator is the actual robot path comprising position and orientation of the tool.

A reachability unit 20 checks whether a point is reachable for the robot end effector. The reachability unit 20 checks whether a point is within the working range of the robot and if the point is a singularity. When the operator specifies new waypoints or edits stored waypoints, it is essential that the waypoints and the path between the waypoints are reachable. Specifying a waypoint or a path which is not reachable, results in a visual message to the operator, e.g. by rendering the infeasible point or path with a dedicated color, pattern, or animation. In one embodiment of the system, the reachability of the waypoints specified by the operator is checked. In another embodiment of the system, the reachability of the actual robot path generated from the path simulator 18 is checked. This is advantageous since the specified waypoints may be feasible but the generated path between the waypoints might not be feasible, e.g. because of singularities or reachability constraints. The reachability is calculated based on a model of the robot and the robot controller, which model is the same as the one used by the robot path simulator 18. The calculations are possible thanks to knowledge about the position of the robot in relation to the object coordinate system. Singularities are possible to detect thanks to the model of the robot controller.

A process simulator 22 simulates the result from the process based on the waypoints, the process information from the point generator 15, the actual robot path, and a model of the process. Thus, the simulation depends on which process to be simulated. The process simulator uses a model of the process to be simulated. The process simulator may comprise more than one process model. For example it may comprise one model for a paint application, one model for a mill application and one model for a welding application. As an example, the model for the paint application comprises a combination of a mathematical model and a neural network model, where the mathematical model simulates the paint application, and the neural network simulates the paint result at the object surface. For instance, the width of the simulated paint-stroke is calculated from the brush number and the distance from the tool center point (TCP) to the object. The distance from the TCP to the object is fixed and is specified by the pointing member.

The process simulator 22 also calculates the process quality based on one or more predefined quality parameters. For paint applications, examples of relevant quality parameters are overlap between paint strokes, parts of the object not covered by the paint, paint thickness, paint width, and dripping of the paint. The quality simulation is based on the previous mentioned model of the process. For paint applications, a model of the paint process may be parameterized from a set of samples taken with different system and environmental parameters, such as brushes, paint type, humidity, and temperature. Based upon these data, a model of the process is generated and the paint thickness and/or stroke width is calculated. In order to calculate these properties, a model of the object may be needed. Such an object model can be provided in different ways. For example, by use of a CAD model, an optical system generating a 3D model of the object by automatic inspection or by using the tracking unit to specify points on the object and from this data, generate a simplified 3D model of the object. The process result should take into account if paint strokes overlap. If there exits a 3D model of the object, the width of the paint strokes is displayed as it would be on the real object.

Based on the simulation of the quality of the process, an estimation of whether the quality of the result does or does not meet one or several predefined quality requirements is done. The quality requirements are, for example, a minimum and a maximum value for the thickness of the paint and an interval for the overlap between two paint strokes. If the estimation shows that the process quality does not to meet the quality requirements a graphical representation with a visual warning to the operator is generated. For paint applications, the paint thickness is rendered in different ways, for example by a different color or a different pattern depending on whether the process result does or does not meet the quality requirement, or the simulated paint thickness may be illustrated continuously along the paint strokes by a graphical property, such as color, color intensity, or color saturation.

A graphics generator 23 generates a 3D graphical representation of the virtual information to be displayed based on information about the robot path from the robot path simulator and information about the process obtained from the process simulator 22. The graphics generator 23 generates a graphical representation of the simulated robot path and a graphical representation of the simulated result of the process. The graphics generator 23 also generates a graphical representation of the tool performing the process along the simulated robot path. The graphical representations are descriptions of the 3D graphical elements, specified in relation to the object coordinate frame. The system further comprises a registering unit 25, registering the generated graphical representation to the image of the object received from the camera unit 8, and providing a composite augmented reality image. The input to the registering unit 25 is the graphical representation from the graphics generator 23, video signals from the camera unit 8, and the position of the display device from the object-tracking unit 24. The output from the registering unit 25 is a composite augmented reality image, which is displayed on the display member 12.

The graphics generator 23, the registering unit 25, and the camera unit 8 form a graphics rendering system, which is configured for a video see-through display, i.e. computer generated graphics are combined with a captured real world image. Alternatively, the graphics rendering system could be configured for an optical see-through display, for which only computer-generated graphics are rendered. Further, the graphics rendering system is configured for either a single-camera system or for a stereoscopic camera system, having two cameras capturing real world images from slightly different positions, giving a tree-dimensional representation of the real world. The graphics rendered by the graphics rendering system is displayed to the operator on the graphical display 12. Thus, the system projects computer generated information, which simulates the specific process, directly onto and/or in relation to the real object to be processed. This information represents the robot path and process related information taught by the operator.

The system comprises an object-tracking unit 24, delivering information about the positional relation between the object and the display member 12. This information is input to the registering unit 25. Preferably, the object tracking is based on the same tracking method as the waypoint-tracking unit and uses the same tracking device. In this embodiment the object tracking is based on image recognition of the image received from the camera unit 8. The object-tracking unit could also be any of the before mentioned examples of tracking systems. An object-tracking unit is needed if the view to be displayed should depend on the position of the operator in relation to the object, which is the case for handheld display members and display members worn by the operator. This gives the operator the flexibility to move around the real object and immediately see the result at the real object of what he has been teaching.

In the following, a specification of the information to be presented to the operator is presented in connection with a paint application. The graphical representation of the simulated result of the process is displayed normal to the pointing direction of the tool along the path, i.e. normal to a TCP. For example, paint strokes should be rendered perpendicular to the longitudinal direction of the brush along the path.

Graphics that are obscured by a foreign object, or the object itself, should not be rendered or rendered in a different way for example by using different color or by using transparent graphics. Alternatively, the graphics are not rendered. A method according to the invention comprises determining whether a part or parts of the generated graphics are hidden and generating said graphical representation based on whether it is hidden or not. Whenever a computer generated graphical element is hidden by the object or some other object, e.g. the operator's hand or the pointing member, the overlaid computer generated graphics should not be rendered, or rendered in a different way, so that the operator can differentiate the graphical hierarchy.

The graphics generator is adapted for generating different graphical representations depending on whether the result of the process is displayed from a front side or a backside in relation to the object. For example, rendered paint strokes should have a front side and a backside, thereby making it easier for the operator to distinguish between back and front. The user may choose to visualize the paint strokes with the actual simulated paint width or the paint strokes may be visualized as a single-colored line segment. The width of the path visualizes, for example, the paint stroke when the paint is on.

For each waypoint specified by the operator, the specified brush number is displayed. A list of brushes is defined prior to the programming procedure and consists typically of three or four parameters that must be tuned to each other. Typical parameters are fan width, paint flow, atomizing airflow, shape airflow, high-voltage level, paint type, and paint color. The final goal is to have a brush with a defined width giving a uniform paint thickness within maximum and minimum values at a given paint speed. At least one specific brush may be defined as "paint-off", where paint flow, fan width, and airflow are all "0", alternatively paint flow is "0", while the other brush parameters are not "0".

In one embodiment of the invention, a graphical representation of the relevant tool is shown moving through the generated robot path in real time. The relevant process information is overlaid the robot path, where this is specified in the program, so that the operator can verify the resulting robot program in real time. The speed of the display is defined in the graphic settings and may be altered during the actual display. The operator can specify how fast this simulation should be performed in relation to real time. For example, the operator can choose to display the simulation in slow motion. It is possible to stop, pause, play backwards, and restart the display of the simulation.

It is possible to configure how graphics are presented on the graphical display member. For instance, the operator may choose to select or de-select one or more of the graphical descriptions.

Fig. 3 is an example of a view shown on the display. The view comprises the object 3 and a graphical representation of the recorded waypoints 30, 32 and the path between the waypoints, projected on the object and path information. Each waypoint 30, 32 taught by the operator is displayed as a dot. Each dot is provided with process information related to that waypoint, such as the brush number. If the displayed brush number is "0" painting is off. The simulated robot path 34 is displayed as a line between the waypoints 30, 32. Note that the generated path is not straight line between the waypoints. The robot path simulator generates the robot path, so that the tool passes through the waypoints at required speed and direction and then a smooth curve is to prefer before an angle.

For each waypoint specified by the operator, information regarding the orientation of the tool is displayed. This is indicated by a small octagonal coordinate system showing the x, y, and z directions. Preferably, each direction has a specific color code. The graphic generator also generates graphics representing the direction of the robot movement by adding arrows to the robot path shown. If the paint is on between two neighboring waypoints 32, 36, the paint stroke is visualized between the two waypoints. The view shows a simulation of the resulting robot path and the paint result.

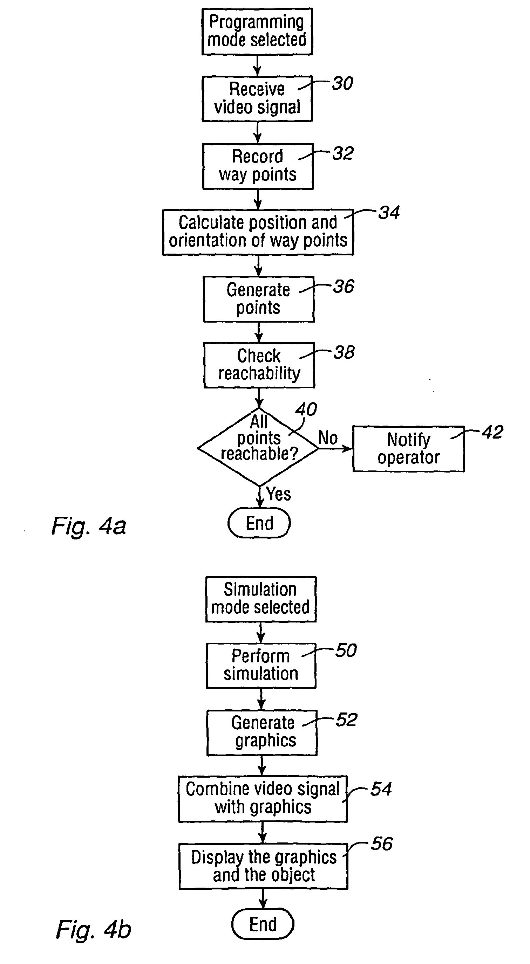

Figures 4a and 4b are flow chart illustrations of the method and the computer program product according to an embodiment of the present invention. It will be understood that each block of the flow chart can be implemented by computer program instructions. The system can take three operational modes: a programming mode, a simulation mode, and an edit mode. The operator chooses the system mode. In the programming mode, the user specifies the waypoints and input information about the process. In the simulation mode the robot path and/or the process are simulated and displayed to the operator. After the way points has been specified by the operator, alternatively after the robot program has been loaded into the computer's memory from the storage device, the user may set the system in edit mode. In edit mode, it is possible to remove stored waypoints, change the position of stored waypoints, change the orientation of stored waypoints, and change process related data, such as brush number of stored waypoints.

Figure 4a shows the method steps when the system is in the programming mode. In block 30, a continuous stream of video signals is received from the camera unit 8. The image obtained comprises the object and the markers. In block 32, the system receives a record signal from the operator and an image is captured for use by the image recognition. Process information specified by the operator is received and stored. In block 34, the markers are recognized by the image recognition, and the position and orientation of the pointing member are calculated in relation to the location of the object and stored. When the operator has recorded the waypoints, the point generator generates a list of points on the path, block 36. In block 38 it is checked whether the points of the list are reachable, i.e. within the working range of the robot and not singularities. If a point is outside the working range or is a singularity, the operator is notified, block 40, 42. When the operator has recorded the waypoints, he may change to the simulation mood.

Figure 4b shows the method when the simulation mode is selected. Before the simulation is started, the operator has to specify what he wants to be simulated. He could choose either to simulate only the robot path or simulate both the robot path and the process. In block 50, the simulation is performed based on the list of waypoints with process specific information generated during the programming mode and a model of the robot, a model of the robot controller and a model of the process. The simulation depends on the choice of the operator about what he wants to view. A graphical representation is generated of the robot path and/or the result of the process based on the simulation, block 52. As seen in block 54, the received video signal is combined with the generated graphics including registering the generated graphical representation to the image of the object to provide a composed augmented reality image. A view of the combined video signal and graphics is displayed, block 56. The generated graphics shows, for example, whether processing is on or off. The display visualizes the view of the camera combined with the generated graphics.

The software used for implementing the method according to the invention is partly based on software known to those skilled in the art. For example, the position and orientation may be generated in ARToolKit based on the position and orientation of the pointing marker in relation to the reference marker. The ARToolKit is developed by Washington University and the University of Hiroshima and is an open-source software library that enables augmented reality applications to be built using accurate computer vision-based tracking techniques. For the application interface, the software Open GL may be used. OpenGL provides a library of 2D and 3D functions including modeling alterations, color, light and shade functions. Microsoft Vision SDK is a library for writing programs to perform image manipulation and analyses on computers. The augmented reality software includes algorithms for drawing graphics, such as points and lines, transferring positions and orientations between different coordinate systems, extracting and generating a sequence list of positions and orientations, capturing process related information, and drawing advanced graphics, such as color-coded points and lines representing paint strokes with different widths and orientations.

The method according to invention is an off-line programming method, i.e. the method may be used outside the robot and the robot controller

The present invention is not limited to the embodiments disclosed but may be varied and modified within the scope of the following claims. For example, the present system is not limited to augmented reality systems utilizing a composed video image but may also be utilized in see-through augmented reality systems, in which only the computer generated graphics are presented to the user who views the graphics on a see-through lens with the real world in the background. The only difference between the two systems is the translation of the camera coordinates into eye coordinates to compensate for the change in perspective between the camera images and the actual real-world perspective of the user. In either case, computer generated graphics are registered to objects in the real world. In the see-through case, the computer-generated graphic is combined with the real-world object by the user rather than in the creation of a composed video image.

Alternatively, the waypoints are loaded into the system from an external system, e.g. a CAD application, or from a database of stored waypoints and process information.

In one embodiment the system comprises a handheld augmented reality display device. The operator holds the handheld display device, showing the real world combined with overlaid computer-generated graphics. The computer-generated graphics may represent process related information, e.g. the programmed robot path, process specific information, target points and events. Either the operator's movements of his hand with a gesture-based recognition system or a pointing and interaction device is used to specify the process related information to the system.

The computer-generated information represents operator input for robot programming. The operator utilizes the handheld AR display to see the result of what he is doing while he is making a new robot program. The handheld display has a camera integrated with the same field of view as the display. The camera captures live video of the real world. The system combines and synchronizes the live video with computer-generated graphics representing the operator's input and presents it on the handheld AR display. The operator can freely move the handheld AR display in the environment, allowing the operator to see the local environment including the object from different viewpoints with overlaid computer generated graphics. The operator "looks" through the handheld AR display to see the generated robot program in relation to the real object.

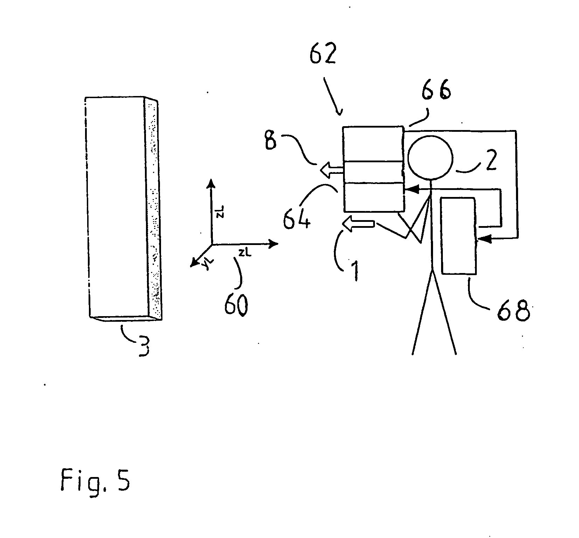

A system according to this embodiment is shown in figure 5. The system comprises a handheld interaction/pointing device 1 with a tracking system for determining its position and orientation in relation to a world coordinate system 60. Alternatively the system comprises a gesture-based recognition system comprising a recognition system for recognizing and determining the position and orientation of a hand or fingers in relation to the world coordinate system. The system further comprises a handheld display device 62, e.g. a tablet PC or a PDA (Personal Digital Assistant). The display device comprises a display member 64, a camera 8 for capturing a stream of images of the environment mounted on or integrated with the display device 64. The camera 8 will be mounted in a fixed position in relation to the display device 64. The display device will be located along the camera view axis and at the camera's image plane.

The system further comprises a tracking system 66 for determining the position and orientation of the display devices. The tracking system is preferable mounted on the display device. The system also comprises a system for generating an augmented reality representation of computer-generated graphical information overlaid the real world representation. The operator 2 movements are sensed through the display tracking system 66.

A wearable computer 68 contains the necessary software in order to generate the augmented reality environment based upon the video stream from the camera 8 and the computer-generated graphics. The wearable computer 68 also contains the necessary software needed to perform the desired task or process, e.g. generating a robot program and performing reachability check. Further, the wearable computer will generate the graphics, which will provide the augmented reality view. Finally, the wearable computer will contain a storage media in order to save, and restore previously saved, information. Communication of the information from the interaction/pointing device 1 to the wearable computer 68 is done through a wired or wireless link. The operator carries the display device 62 which will provide him/her with an augmented reality view of the environment. The display device is of "video see through" type.

Video see-through is used to generate and present an augmented reality world at the handheld AR display device. The camera integrated with the display device is used to capture a live video stream of the real world. The camera is located in relation with the display in such a way that it provides the same view, as the user would get by looking "through" the display device. The live video stream combined with computer-generated graphics is presented in real-time at the display device. Additional functionality includes camera zooming with output of the actual camera focal length. This will enable the system to display the computer-generated graphics correctly while zooming. The camera may also be used for vision-based tracking if vision-based tracking is used as the tracking system.

## Claims

1. A method in connection with programming of an industrial robot, comprising teaching the robot a path having a number of waypoints located on or in the vicinity of an object (3) to be processed by the robot, the method comprising:
- obtaining information about the position of the waypoints in relation to the object,
- storing the information about the position of the waypoints,
- simulating the robot path based on the received information about the waypoints and a model of the robot,
**characterized in that** the method further comprises;
- generating a graphical representation of the robot path based on the simulated robot path, and
- displaying a view comprising the object and said graphical representation of the robot path projected on the object by means of obtaining an image of the object by means of a camera (8), registering the generated graphical representation to the image of the object to provide a composite augmented reality image and displaying said view based on the composite augmented reality image..

2. A method according to claim 1, further comprising:
- obtaining information about tool orientations in the waypoints, and
- generating a graphical representation of the tool orientations in the waypoints.

3. A method according to claim 1 or 2, further comprising:
- obtaining information about the process to be performed by the robot in connection with the robot path,
- simulating the result of the process based upon the obtained information about the waypoints, the obtained information about the process and a model of the process,
- generating a graphical representation of the simulated result of the process, and
- displaying a view showing the graphical representation of the simulated result of the process projected on the object.

4. A method according to claim 3, further comprising:
- obtaining information about which tool to be used to perform the process and about the orientation of the tool in the waypoints,
- simulating the tool performing the process,
- generating a graphical representation of the tool performing the process along the robot path based upon the obtained information about the position of the waypoints, the orientation of the tool, and
- displaying a view showing the tool moving along the robot path performing the process, based on the generated graphical representation of the simulation of the tool performing the process.

5. A method according to any of the claims 3-4, further comprising:
- simulating the quality of the result of the process based on one or a plurality of predefined quality parameters and the model of the process,
- generating a graphical representation of the quality of the result of the process, and
- displaying the view based on the generated graphical representation of the simulation of the quality of the result of the process.

6. A method according to claim 5, further comprising:
- estimating whether the quality of the result does not meet one or several quality requirements, based on said simulation of the quality of the result of the process, and
- generating said graphical representation with a visual warning to the operator where the process quality is estimated not to meet the quality requirements.

7. A method according to any of the previous claims, wherein the view is displayed as a function of time and it is displayed proportional to the robot movements in real-time.

8. A method according to claim 7, further comprising:
-receiving information about a desired speed of the displaying of the view, and
- displaying the view in accordance with the desired speed.

9. A method according to any of the previous claims, further comprising: determining whether a point on the robot path is within the working range of the robot, and notifying the operator if the point is outside the working range of the robot.

10. A method according to any of the previous claims, wherein the steps obtaining and storing information about the position of the waypoints in relation to the object, further comprises:
- obtaining information about the position of a pointing member (1) pointing at points on or in the vicinity of the object,
- determining the position of the points in relation to the object based upon said obtained information,
- storing the point being presently pointed out by the pointing member as a waypoint upon receiving a recording signal.

11. A method according to any of the previous claims, comprising obtaining information about the position of a display member in relation to the object and displaying said view in dependence of the position of the display member in relation to the object.

12. A computer program product directly loadable into the internal memory of a computer, comprising software code portions for performing the steps of any of the claims 1-11, when said product is run on a computer.

13. A computer readable medium having a program recorded thereon, where the program is to make a computer perform the steps of any of the claims 1-11, when said program is run on the computer.

14. A system for use in connection with programming of an industrial robot, the programming comprises teaching the robot a path having a number of waypoints located on or in the vicinity of an object (3) to be processed by the robot, the system comprising:
- information obtaining means (10), obtaining information about the waypoints of the path in relation to the object,
- a storage unit (16), for storing the obtained information,
- a graphics generator (23), generating a graphical representation, and
- a display member (12;64) displaying a view comprising the object and the graphical representation generated by the graphics generator, **characterized in that** the system further comprises
- a simulation unit (18), simulating the robot path based on the obtained information about the waypoints and a model of the robot, that the graphics generator (23), is adapted for generating a graphical representation of the simulated robot path,
- a camera (8) adapted for delivering an image of the object,
- a registering unit (25), registering the generated graphical representation to the image of the object to provide a composite augmented reality image and the display member (12) is adapted for displaying the composite augmented reality image.

15. A system according to claim 14, **characterized in that** said information obtaining means (10), is adapted for obtaining information about the process to be performed by the robot in connection with the robot path, the system comprises a second simulation unit (22), simulating the result of the process based upon the obtained information about the waypoints, the obtained information about the process and a model of the process, and that said graphics generator (2) is adapted for generating a graphical representation of the simulated result of the process.

16. A system according to claim 15, **characterized in that** said information obtaining means (1), is adapted for obtaining information about which tool to be used to perform the process and about the orientation of the tool in the waypoints, the second simulation unit (22) is adapted for simulating the tool performing the process, and that said graphics generator (23) is adapted for generating a graphical representation of the tool performing the process along the robot path based upon the obtained information.

17. A system according to any of the claims 14-16, **characterized in that** it comprises a reachability unit (20), determining, based on a model of the robot, whether a waypoint is within the working range of the robot, and notifying the operator if the waypoint is outside the specified working range.

18. A system according to any of the claims 14-17, **characterized in that** it further comprises a pointing member (1) adapted for pointing out points on or in the vicinity of the object, a position determining means (14), determining the position of said points in relation to the object, and an activating member, storing a point as a waypoint upon activation.

19. A system according to any of the claims 14-18, **characterized in that** the display member (12), is adapted for displaying the view as a function of time, which is proportional to the real time it takes for the robot to move through the path.

20. A system according to claim 19, **characterized in that** it is adapted for receiving information about a desired speed of the displaying of the view in relation to the real time it takes for the robot so move through the path, and the display member (12) is adapted for displaying the view in accordance with the desired speed.

21. A system according to any of the claims 14-20, **characterized in that** it comprises an object tracking unit (24) adapted for delivering information about the position of the display member (12) in relation to the object (3) and the system is adapted for displaying said view in dependence of the position of the display member in relation to the object (3).

22. A system according to claim 14, **characterized in that** it comprises a handheld display device (62) comprising the display member (64) and the camera (8).

23. A system according to claim 22, **characterized in that** the handheld display device is arranged so that the user seems to look directly through the display.

24. Use of the method according to any of the claims 1-11 for a paint application.

## Patentansprüche

1. Ein Verfahren in Verbindung mit der Programmierung eines Industrieroboters, welches umfasst, den Roboter einen Weg zu lehren, welcher eine Zahl von Wegpunkten hat, die sich auf oder in der Nähe von einem durch den Roboter zu verarbeitenden Objekt (3) befinden, wobei das Verfahren umfasst:
- Erhalten von Information über die Position der Wegpunkte in Beziehung zu dem Objekt,
- Speichern der Information über die Position der Wegpunkte,
- Simulieren des Roboterwegs basierend auf der erhaltenen Information über die Wegpunkte und einem Modell des Roboters,
**dadurch gekennzeichnet, dass** das Verfahren weiter umfasst:
- Erzeugen einer graphischen Darstellung des Roboterwegs basierend auf dem simulierten Roboterweg, und
- Anzeigen einer Ansicht, die das Objekt und die graphische Darstellung des Roboterwegs umfasst, auf das Objekt projiziert durch Erhalten eines Objektbildes mittels einer Kamera (8), Registrieren der erzeugten graphischen Darstellung mit dem Objektbild, um ein zusammengesetztes Bild erweiterter Realität bereitzustellen, und Anzeigen der Ansicht basierend auf dem zusammengesetzten Bild erweiterter Realität.

2. Ein Verfahren nach Anspruch 1, welches weiter umfasst:
- Erhalten von Information über Geräteorientierungen in den Wegpunkten und
- Erzeugen einer graphischen Darstellung der Geräteorientierungen in den Wegpunkten.

3. Ein Verfahren nach einem der Ansprüche 1 oder 2, welches weiter umfasst:
- Erhalten von Information über den durch den Roboter auszuführenden Vorgang in Verbindung mit dem Roboterweg,
- Simulieren des Ergebnisses des Vorgangs basierend auf der erhaltenen Information über die Wegpunkte, auf der erhaltenen Information über den Vorgang und auf einem Modell des Vorgangs,
- Erzeugen einer graphischen Darstellung des simulierten Ergebnisses des Vorgangs und
- Anzeigen einer Ansicht, welche die graphische Darstellung des simulierten Ergebnisses des Vorgangs auf das Objekt projiziert zeigt.

4. Ein Verfahren nach Anspruch 3, welches weiter umfasst:
- Erhalten von Information darüber, welches Gerät benutzt werden soll, um den Vorgang auszuführen, und über die Orientierung des Geräts in den Wegpunkten,
- Simulieren des den Vorgang ausführenden Geräts,
- Erzeugen einer graphischen Darstellung des den Vorgang ausführenden Geräts entlang des Roboterwegs basierend auf der erhaltenen Information über die Position der Wegpunkte, die Orientierung des Geräts und
- Anzeigen einer Ansicht, welche das den Vorgang ausführende Gerät in Bewegung entlang des Roboterwegs zeigt, basierend auf der erzeugten graphischen Darstellung der Simulation des den Vorgang ausführenden Geräts.

5. Ein Verfahren nach einem der Ansprüche 3 bis 4, welches weiter umfasst:
- Simulieren der Qualität des Ergebnisses des Vorgangs basierend auf einem vordefinierten Qualitätsparameter oder auf einer Vielzahl von vordefinierten Qualitätsparametern und auf einem Modell des Vorgangs,
- Erzeugen einer graphischen Darstellung der Qualität des Ergebnisses des Vorgangs und
- Anzeigen der Ansicht basierend auf der erzeugten graphischen Darstellung der Simulation der Qualität des Ergebnisses des Vorgangs.

6. Ein Verfahren nach Anspruch 5, welches weiter umfasst:
- Einschätzen, ob die Qualität des Ergebnisses einer Qualitätsanforderung oder mehreren Qualitätsanforderungen nicht genügt, basierend auf der Simulation der Qualität des Ergebnisses des Vorgangs und
- Erzeugen der graphischen Darstellung mit einer visuellen Warnung an die Bedienungsperson, wenn die Vorgangsqualität als den Qualitätsanforderungen nicht genügend eingeschätzt wird.

7. Ein Verfahren nach einem der vorhergehenden Ansprüche,
wobei die Ansicht als Funktion der Zeit angezeigt wird und proportional zu den Roboterbewegungen in Echtzeit angezeigt wird.

8. Ein Verfahren nach Anspruch 7, welches weiter umfasst:
- Empfangen von Information über eine gewünschte Geschwindigkeit des Anzeigens der Ansicht und
- Anzeigen der Ansicht gemäß der gewünschten Geschwindigkeit.

9. Ein Verfahren nach einem der vorhergehenden Ansprüche, welches weiter umfasst:
- Bestimmen, ob ein Punkt auf dem Roboterweg innerhalb des Arbeitsbereichs des Roboters ist und Benachrichtigen der Bedienungsperson, falls der Punkt außerhalb des Arbeitsbereichs des Roboters ist.

10. Ein Verfahren nach einem der vorhergehenden Ansprüche, wobei die Schritte des Erhaltens und Speicherns von Information über die Position der Wegpunkte in Beziehung zu dem Objekt weiter umfassen:
- Erhalten von Information über die Position eines Zeigeelements (1), welches auf Punkte auf dem Objekt oder in der Nähe des Objekts zeigt,
- Bestimmen der Position der Punkte in Beziehung zu dem Objekt basierend auf der erhaltenen Information
- Speichern des Punktes, auf den durch das Zeigeelement gegenwärtig hingewiesen wird, als ein Wegpunkt bei Erhalt eines Aufzeichnungssignals.

11. Ein Verfahren nach einem der vorhergehenden Ansprüche, welches umfasst:
- Erhalten von Information über die Position eines Anzeigeelements in Beziehung zu dem Objekt und Anzeigen der Ansicht in Abhängigkeit von der Position des Anzeigeelements in Beziehung zu dem Objekt.

12. Ein Computerprogrammprodukt, welches direkt in den internen Speicher eines Computers ladbar ist, und welches Softwarecodeteile umfasst zum Ausführen der Schritte eines der Ansprüche 1 bis 11, wenn das Produkt auf einem Computer laufen gelassen wird.

13. Ein computerlesbares Medium, welches ein darauf aufgezeichnetes Programm hat,
wobei das Programm einen Computer die Schritte eines der Ansprüche 1 bis 11 ausführen macht, wenn das Programm auf dem Computer laufen gelassen wird.

14. Ein System zur Benutzung in Verbindung mit dem Programmieren eines Industrieroboters, wobei das Programmieren umfasst, den Roboter einen Weg zu lehren, welcher eine Zahl von Wegpunkten hat, die sich auf einem oder in der Nähe von einem durch den Roboter zu verarbeitenden Objekt (3) befinden, wobei das System umfasst:
- Informationserhaltungsmittel (10), das Information über die Wegpunkte des Wegs in Beziehung zu dem Objekt erhält
- eine Speichereinheit (16) zum Speichern der erhaltenen Information,
- einen Graphikerzeuger (23), welcher eine graphische Darstellung erzeugt, und
- ein Anzeigeelement (12; 64), welches eine Ansicht anzeigt, die das Objekt und die von dem Graphikerzeuger erzeugte graphische Darstellung umfasst,
**dadurch gekennzeichnet, dass** das System weiter umfasst
- eine Simulationseinheit (18), die den Roboterweg simuliert basierend auf der erhaltenen Information über die Wegpunkte und auf einem Modell des Roboters,
wobei der Graphikerzeuger (23) geeignet ist, eine graphische Darstellung des simulierten Roboterwegs zu erzeugen,
- eine Kamera (8) geeignet für das Liefern eines Objektbildes,
- eine Registriereinheit (25), welche die erzeugte graphische Darstellung mit dem Objektbild registriert, um ein zusammengesetztes Bild erweiterter Realität bereitzustellen, und das Anzeigeelement (12) ist geeignet zum Anzeigen des zusammengesetzten Bildes erweiterter Realität.

15. Ein System gemäß Anspruch 14, **dadurch gekennzeichnet, dass**
- das Informationserhaltungsmittel (10) geeignet ist zum Erhalten von Information über den durch den Roboter auszuführenden Vorgang in Verbindung mit dem Roboterweg,
- das System eine zweite Simulationseinheit (22) umfasst, die das Ergebnis des Vorgangs simuliert basierend auf der erhaltenen Information über die Wegpunkte, auf der erhaltenen Information über den Vorgang und auf einem Modell des Vorgangs, und
- der Graphikerzeuger (23) geeignet ist zum Erzeugen einer graphischen Darstellung des simulierten Ergebnisses des Vorgangs.

16. Ein System gemäß Anspruch 15, **dadurch gekennzeichnet, dass**
- das Informationserhaltungsmittel (10) geeignet ist zum Erhalten von Information darüber, welches Gerät zu benutzen ist, um den Vorgang auszuführen, und über die Orientierung des Geräts in den Wegpunkten,
- die zweite Simulationseinheit (22) geeignet ist, zum Simulieren des den Vorgang ausführenden Geräts, und
- der Graphikerzeuger (23) geeignet ist zum Erzeugen einer graphischen Darstellung des den Vorgang ausführenden Geräts entlang des Roboterwegs basierend auf der erhaltenen Information.

17. Ein System gemäß einem der Ansprüche 14 bis 16, **dadurch gekennzeichnet, dass**
- es eine Erreichbarkeitseinheit (20) umfasst, welche basierend auf einem Modell des Roboters bestimmt, ob ein Wegpunkt innerhalb des Arbeitsbereichs des Roboters ist, und welche die Bedienungsperson benachrichtigt, wenn der Wegpunkt außerhalb des spezifizierten Arbeitsbereichs ist.

18. Ein System gemäß einem der Ansprüche 14 bis 17, **dadurch gekennzeichnet, dass** es weiter umfasst
- ein Zeigeelement (1) geeignet zum Hinweisen auf Punkte auf oder in der Nähe von dem Objekt,
- ein Positionsbestimmungsmittel (14), welches die Position der Punkte in Beziehung zu dem Objekt bestimmt, und
- ein Aktivierungselement, welches einen Punkt als Wegpunkt bei Aktivierung speichert.

19. Ein System gemäß einem der Ansprüche 14 bis 18, **dadurch gekennzeichnet, dass** das Anzeigeelement (12) geeignet ist zum Anzeigen der Ansicht als eine Funktion der Zeit, welche der Echtzeit proportional ist, die der Roboter benötigt, um sich durch den Weg zu bewegen.

20. Ein System gemäß Anspruch 19, **dadurch gekennzeichnet, dass**
- es geeignet ist zum Empfangen von Information über eine gewünschte Geschwindigkeit des Anzeigens der Ansicht in Beziehung zur Echtzeit, die der Roboter benötigt, um sich durch den Weg zu bewegen, und
- das Anzeigeelement (12) geeignet ist zum Anzeigen der Ansicht gemäß der gewünschten Geschwindigkeit.

21. Ein System gemäß einem der Ansprüche 14 bis 20, **dadurch gekennzeichnet, dass**
- es eine Objektnachverfolgungseinheit (24) umfasst, die geeignet ist zum Liefern von Information über die Position des Anzeigeelements (12) in Beziehung zu dem Objekt (3) und
- das System geeignet ist zum Anzeigen der Ansicht in Abhängigkeit von der Position des Anzeigeelements in Beziehung zu dem Objekt (3).

22. Ein System gemäß Anspruch 14, **dadurch gekennzeichnet, dass**
- es eine tragbare Anzeigevorrichtung (62) umfasst, welche das Anzeigeelement (64) und die Kamera (8) umfasst.

23. Ein System gemäß Anspruch 22, **dadurch gekennzeichnet, dass**
- die tragbare Anzeigevorrichtung so angeordnet ist, dass der Benutzer direkt durch die Anzeige zu sehen scheint.

24. Benutzung des Verfahrens gemäß einem der Ansprüche 1 bis 11 für eine Lack-/Farbanwendung.

## Revendications

1. Procédé en relation avec la programmation d'un robot industriel, comprenant l'apprentissage au robot d'un trajet comportant un certain nombre de points de cheminement situés sur un objet (3) que le robot doit traiter ou à son voisinage, le procédé comprenant :
l'obtention d'information concernant la position des points de cheminement en relation avec l'objet,
la mémorisation de l'information concernant la position des points de cheminement,
la simulation du trajet du robot, basée sur l'information reçue concernant les points de cheminement et sur un modèle du robot,
**caractérisé en ce que** le procédé comprend en outre :
la génération d'une représentation graphique du trajet du robot, basée sur le trajet simulé du robot, et
l'affichage d'une vue comprenant l'objet et ladite représentation graphique du trajet du robot projetée sur l'objet au moyen de l'obtention d'une image de l'objet au moyen d'une caméra (8), enregistrant la représentation graphique générée sur l'image de l'objet pour fournir une image réaliste composite complétée et l'affichage de ladite vue, basée sur l'image composite de réalité augmentée.

2. Procédé selon la revendication 1, comprenant en outre :
l'obtention d'information concernant les orientations des outils aux points de cheminement, et
la génération d'une représentation graphique des orientations des outils aux points de cheminement.

3. Procédé selon la revendication 1 ou 2, comprenant en outre :
l'obtention d'information concernant le processus que le robot doit exécuter en relation avec le trajet du robot,
la simulation du résultat du processus, basée sur l'information obtenue concernant les points de cheminement, l'information obtenue concernant le processus et un modèle du processus,
la génération d'une représentation graphique du résultat simulé du processus, et
l'affichage d'une vue montrant la représentation graphique du résultat simulé du processus projeté sur l'objet.

4. Procédé selon la revendication 3, comprenant en outre :
l'obtention d'information concernant l'outil qui doit être utilisé pour exécuter le processus et concernant l'orientation de l'outil aux points de cheminement,
la simulation de l'outil exécutant le processus,
la génération d'une représentation graphique de l'outil exécutant le processus sur le trajet du robot, basée sur l'information obtenue concernant la position des points de cheminement, l'orientation de l'outil, et
l'affichage d'une vue montrant l'outil se déplaçant sur le trajet du robot exécutant le processus, basé sur la représentation graphique générée de la simulation de l'outil exécutant le processus.

5. Procédé selon l'une quelconque des revendications 3 à 4, comprenant en outre :
la simulation de la qualité du résultat du processus, basée sur un paramètre ou sur une pluralité de paramètres de qualité prédéfinis et sur le modèle du processus,
la génération d'une représentation graphique de la qualité du résultat du processus, et
l'affichage de la vue, basée sur la représentation graphique générée de la simulation de la qualité du résultat du processus.

6. Procédé selon la revendication 5, comprenant en outre :
l'estimation du fait que la qualité du résultat ne satisfait pas une ou plusieurs exigences de qualité, basée sur ladite simulation de la qualité du résultat du processus, et
la génération de ladite représentation graphique avec un avertissement visuel à l'opérateur lorsqu'on estime que la qualité du processus ne satisfait pas les exigences de qualité.

7. Procédé selon l'une quelconque des revendications précédentes, dans lequel la vue est affichée en fonction du temps et est affichée proportionnellement aux mouvements du robot en temps réel.

8. Procédé selon la revendication 7, comprenant en outre :
la réception d'information concernant la vitesse désirée de l'affichage de la vue, et
l'affichage de la vue selon la vitesse désirée.

9. Procédé selon l'une quelconque des revendications précédentes, comprenant en outre la détermination du fait qu'un point sur le trajet du robot se trouve dans la plage de fonctionnement du robot, et l'avertissement de l'opérateur si le point est à l'extérieur de la plage de fonctionnement du robot.

10. Procédé selon l'une quelconque des revendications précédentes, dans lequel les étapes d'obtention et de mémorisation d'information concernant la position des points de cheminement en relation avec l'objet comprennent en outre :
l'obtention d'information concernant la position d'un élément de pointage (1) pointant sur des points sur l'objet ou à son voisinage,
la détermination de la position des points en relation avec l'objet, basée sur ladite information obtenue,
l'enregistrement du point actuellement désigné par l'élément de pointage en tant que point de cheminement lors de la réception d'un signal d'enregistrement.

11. Procédé selon l'une quelconque des revendications précédentes, comprenant l'obtention d'information concernant la position d'un élément d'affichage en relation avec l'objet et l'affichage de ladite vue en fonction de la position de l'élément d'affichage en relation avec l'objet.

12. Programme informatique directement chargeable dans la mémoire interne d'un ordinateur, comprenant des partis de code logiciel pour exécuter les étapes selon l'une quelconque des revendications 1 à 11, lorsque ledit programme est exécuté sur un ordinateur.

13. Support lisible par un ordinateur comportant un programme enregistré sur celui-ci, où le programme est destiné à faire exécuter par l'ordinateur les étapes selon l'une quelconque des revendications 1 à 11, lorsque ledit programme est exécuté sur l'ordinateur.

14. Système destiné à être utilisé en relation avec la programmation d'un robot industriel, la programmation comprenant l'apprentissage au robot d'un trajet comportant un certain nombre de points de cheminement situés sur un objet (3) que le robot doit traiter ou à son voisinage, le système comprenant :
des moyens d'obtention d'information (10) pour obtenir de l'information concernant les points de cheminement du trajet en relation avec l'objet,
une unité de mémorisation (16) pour mémoriser l'information obtenue,
un générateur graphique (23), générant une représentation graphique, et
un élément d'affichage (12; 64) affichant une vue comprenant l'objet et la représentation graphique générée par le générateur graphique, **caractérisé en ce que** le système comprend en outre
une unité de simulation (18) simulant le trajet du robot, en se basant sur l'information obtenue concernant les points de cheminement et sur un modèle du robot, **en ce que** le générateur graphique (23) est adapté à générer une représentation graphique du trajet simulé du robot,
une caméra (8) adaptée à délivrer une image de l'objet,
une unité d'enregistrement (25) enregistrant la représentation graphique générée sur l'image de l'objet pour fournir une image composite de réalité augmentée et l'élément d'affichage (12) est adapté à afficher l'image composite de réalité augmentée.

15. Système selon la revendication 14, **caractérisé en ce que** lesdits moyens d'obtention d'information (10) sont adaptés à obtenir de l'information concernant le processus que le robot doit exécuter en relation avec le trajet du robot, le système comprend une deuxième unité de simulation (22) simulant le résultat du processus, en se basant sur l'information obtenue concernant les points de cheminement, l'information obtenue concernant le processus et un modèle du processus, et **en ce que** ledit générateur graphique (2) est adapté à générer une représentation graphique du résultat simulé du processus.

16. Système selon la revendication 15, **caractérisé en ce que** lesdits moyens d'obtention d'information (1) sont adaptés à obtenir de l'information concernant l'outil qui doit être utilisé pour exécuter le processus et concernant l'orientation de l'outil aux points de cheminement, la deuxième unité de simulation (22) est adaptée à simuler l'outil exécutant le processus, et **en ce que** ledit générateur graphique (23) est adapté à générer une représentation graphique de l'outil exécutant le processus sur le trajet du robot, en se basant sur l'information obtenue.

17. Système selon l'une quelconque des revendications 14 à 16, **caractérisé en ce qu'**il comprend une unité d'accessibilité (20), déterminant, en se basant sur un modèle du robot, si un point de cheminement appartient à la plage de fonctionnement du robot, et avertissant l'opérateur si le point de cheminement est à l'extérieur de la plage de fonctionnement spécifiée.

18. Système selon l'une quelconque des revendications 14 à 17, **caractérisé en ce qu'**il comprend en outre un élément de pointage (1) adapté à désigner des points sur l'objet ou à son voisinage, un moyen de détermination de position (14), déterminant la position desdits points en relation avec l'objet, et un élément d'activation, mémorisant un point en tant que point de cheminement lors de l'activation.

19. Système selon l'une quelconque des revendications 14 à 18, **caractérisé en ce que** l'élément d'affichage (12) est adapté à afficher la vue en fonction du temps, qui est proportionnelle au temps réel qui faut pour que le robot se déplace sur le trajet.

20. Système selon la revendication 19, **caractérisé en ce qu'**il est adapté à recevoir de l'information concernant la vitesse désirée de l'affichage de la vue en relation avec le temps réel qu'il faut pour que le robot se déplace ainsi sur le trajet, et l'élément d'affichage (12) est adapté à afficher la vue en fonction de la vitesse désirée.

21. Système selon l'une quelconque des revendications 14 à 20, **caractérisé en ce qu'**il comprend une unité de suivi d'objet (24) adaptée à délivrer de l'information concernant la position de l'élément d'affichage (12) en relation avec l'objet (3) et le système est adapté à afficher ladite vue en fonction de la position de l'élément d'affichage en relation avec l'objet (3).

22. Système selon la revendication 14, **caractérisé en ce qu'**il comprend un dispositif d'affichage portatif (62) comprenant l'élément d'affichage (64) et la caméra (8).

23. Système selon la revendication 22, **caractérisé en ce que** le dispositif d'affichage portatif est agencé de sorte que l'utilisateur semble regarder directement à travers le dispositif d'affichage.

24. Utilisation du procédé selon l'une quelconque des revendications 1 à 11, pour une application de peinture.
